# EUROPEAN PATENT SPECIFICATION

(11) **EP 2 183 073 B1**
(45) Date of publication and mention of the grant of the patent: **27.06.2012**
(21) Application number: 08788469.8
(22) Date of filing: 29.08.2008
(51) Int. Cl.: B23K 9/04, B23Q 11/00

(54) **MANUFACTURE OF WELDED COMPONENTS**
HERSTELLUNG VON GESCHWEISSTEN KOMPONENTEN
FABRICATION DE COMPOSANTS SOUDÉS

(30) Priority: 30.08.2007 GB 0716729
(43) Date of publication of application: 12.05.2010
(73) Proprietor: Welding Alloys Limited, Fowlmere Near Royston Hertfordshire SG8 7QS (GB)
(72) Inventor: TECCO, Dorival, Hertfordshire SG8 7QS (GB)
(74) Representative: Turnbull, Alexander James
(86) International application number: PCT/GB2008/002922
(87) International publication number: WO 2009/027682

(56) References cited:
- WO-A-98/55257
- WO-A-2005/087381
- WO-A-2007/028990

## Description

The present invention relates, in general, to fusion processes used to improve the characteristics of certain types of materials. In particular, the present invention relates to metallic components which are welded.

For simplicity in this application, any references to "welding" imply "welding, cladding, hardfacing, brazing and/or soldering", and any references to "welded" imply "welded, clad, hardfaced, brazed and/or soldered".

The manufacture of welded rollers, plates and similar metal products provides components which are used in harsh and demanding working environments where resistance to abrasion, adhesion, erosion, cavitation, oxidation and/or corrosion is important and which comprise a metallic base or substrate that is welded on one or more of its surface. Such a substrate may be a steel, low-alloy ferrous material, iron or high-alloy ferrous material, cobalt-based alloy, nickel-based alloy or a copper-based alloy.

Throughout this specification, the word "manufacture" is used in respect of not only the primary production of welded rollers, plates and other similar metal components but also the refurbishment of such components.

A typical technique for manufacturing welded rollers involves an arc welding operation to the outer surface of a comparatively inexpensive and less durable cylindrical metal substrate which after such welding is demounted from the welding apparatus and is transported to remote machinery apparatus where the now welded surface is machined, for example, by milling, to provide a welded surface of a predetermined depth and, hence, a welded roller of a predetermined diameter, as well as of a desired smoothness.

In WO 2007/028990, the applicant of the present invention discloses an apparatus and method for use in the manufacture of hardfaced, clad metal substrates comprising welding means at a cladding location, means for supporting a substrate to be metal clad by the welding means at the cladding location and means arranged to machine the surface of a so-clad substrate at the cladding location.

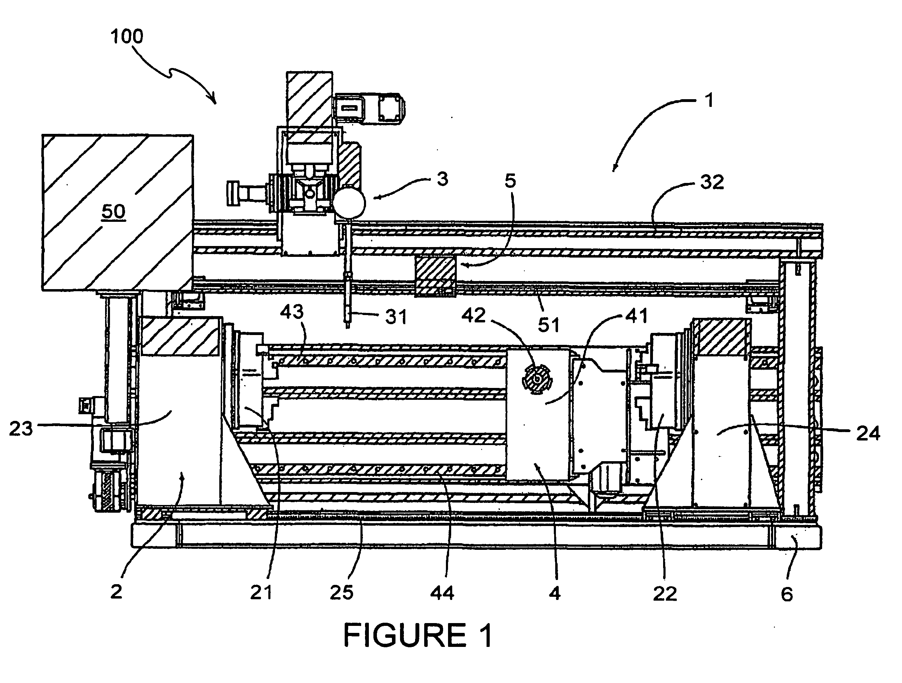

Figure 1 illustrates an apparatus according to the prior art used for manufacturing a welded roller (not shown) for use in a steel rolling plant. The apparatus comprises four main components at a cladding location 100, namely:
a) a device similar to a lathe and indicated generally at 2 for rotatably supporting a metal cylinder (not shown), as a substrate, to be welded with a metal by arc welding;
b) an arc welding device indicated generally at 3 for welding the surface of the metal cylinder with metal;
c) a device indicated generally at 4 for machining the welded surface of the cylinder, and
d) a laser device indicated generally at 5 for monitoring the welded component and/or the unwelded surface of the cylinder.

The apparatus 1 comprises a bed 6 upon which the devices 2 to 5 are mounted at the welding location 100. The lathe-type device 2 comprises a headstock 21 mounted rotatably in conventional manner to a drive unit 23 which is fixed with respect to the bed 6. A tailstock 22 is mounted rotatably to another unit 24 which is mounted upon bed rails 25 for linear movement towards and away from the drive unit 23 and associated headstock 21, again in known manner.

The axially opposed ends of a metal cylinder (not shown) to be welded can be mounted to respective ones of the headstock 21 and tailstock 22 for rotation with respect to the arc welding device 3 about an axis generally perpendicular to the longitudinal axis of the arc welding gun of the device 3.

Use of the apparatus 1 as described above provides a means to provide a fusion process applied to materials, in particular, to metallic components which are welded.

One requirement of providing a substrate for machining or processing down to a required dimension or smoothness is that an excess amount of the material to be machined must be deposited on the component to be machined.

Once the excess material has been machined away from the surface of the component it is typically collected and disposed of in a landfill or transferred to scrap yards or sent for re-melting. The excess material can be a significant proportion of the total material deposited making the process inefficient. Further, the sharpness and composition of the excess material means that disposal can be costly in financial terms and provide a significant health and safety concern for users.

According to a first aspect of the present invention, there is provided an apparatus according to claim 1.

Accordingly the present invention allows for the collection and processing of the excess metal for subsequent use. The first outlet path is a feedback path connected to an input at the welding location or connected to a storage unit. The excess metal can therefore be stored and, in the case of welding, recirculated into the fusion process. Advantageously, the recirculated excess metal has a composition matched to the required metal at the welding location.

Preferably, a crushing means is disposed in the first outlet path. A crushing means permits the excess metal to be processed into a preferred size for efficient reuse and/or storage.

Preferably, the debris separator is configured to separate a metal from the remainder of the machined debris.

Preferably, the debris separator is a magnetic device. A magnetic device is preferred where the machined debris has magnetic properties. A magnetic device may be provided as a coil.

Preferably, the first and/or second outlet paths comprise a conveyor belt and the first and second outlet paths are offset in height relative to one and another. Where the first outlet path is, when in use, disposed above the second outlet path and the first outlet path does not overlap the second outlet path the second outlet path may optionally be a free-fall outlet path to a waste unit. Advantageously, the debris separator is located in the free-fall outlet path.

In order to provide a smooth and efficiently run apparatus, the machined debris is preferably continuously sorted by the debris sorter and continuously fed back to the input at the cladding location.

According to a second aspect of the present invention, there is provided a method according to claim 10.

Preferably, the separating of the machined debris and the feeding-back of separated machined debris is carried out continuously.

Preferably, the method comprises storing via the first outlet path one type of separated machined debris for subsequent use in the step of welding the component and optionally crushing the machined debris prior to feeding-back or storing the one type of separated machined debris.

Preferably, the step of storing or feeding-back is carried out continuously whilst the step of welding and machining is carried out.

Embodiments of the present invention will now be described, by way of example only, and with reference to the accompanying drawings in which:
Figure 1 is a front elevational view of a welded roller manufacturing apparatus according to the prior art;
Figure 2 is a schematic diagram of a welding apparatus according to a first embodiment of the present invention;
Figure 3 is a schematic flow diagram according to a second embodiment of the present invention; and
Figure 4 is a schematic flow diagram according to a third embodiment of the present invention.

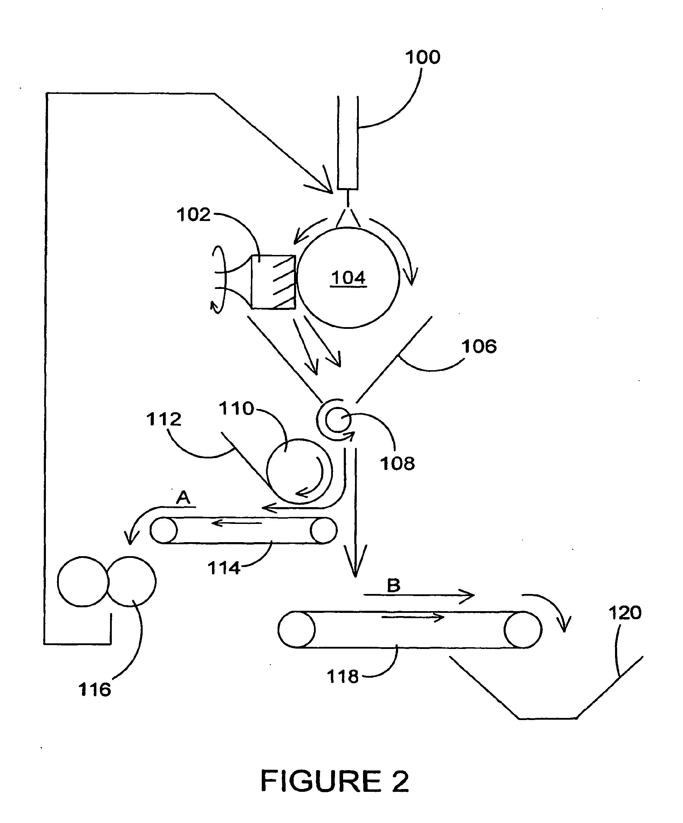

Referring to Figure 2, a welding apparatus according to a first embodiment of the present invention comprises a welding device 100; a milling head 102; a component 104 to be welded; a hopper 106; a first conveyor 108; a magnetic device 110; a scraper 112; a second conveyor 114; a crushing means 116; a third conveyor 118 and a waste unit 120.

In operation, the milling head 102 machines off material which has been applied to the surface of the component 104 through welding by a fusion process such as electron-beam, arc-welding or laser fusion.

The material applied to the surface of the component 104 in the case of arc-welding can be a mixture of slag, flux and a weld metal such as a steel, low-alloy ferrous material, iron or a high-alloy ferrous material or a cobalt, nickel or copper-based alloy. During machining of the component 104, debris in the form of metallic shavings is ejected from the surface of the component 104. Such debris may also include traces of flux and slag.

The debris is collected in the hopper 106 and fed by the first conveyor 108 to a magnetic device 110. In the present embodiment, a magnetic device 110 is preferred as a debris separator because a metallic material having magnetic properties is used. However, the particular debris separator is chosen having regard to the composition of the debris requiring separation. The debris separator is therefore interchangeable and according to the composition of the debris requiring separation different debris separators can be selected.

The magnetic device 110 attracts metallic debris along a first outlet path A and a scraper 112 releases the metallic debris from the magnetic device and onto a second conveyor 114. The second conveyor 114 conveys the metallic debris to a crushing means 116 which crushes the metallic debris into particles of a size suitable for reuse as, for example, as a filler metal for welding or as a filler that is added to the flux for welding. The crushed and sorted metallic debris can be recycled back to the fusion process stage as illustrated in Figure 2 or stored for subsequent use.

The debris not attracted by the magnetic device 110 falls towards a third conveyor 118 along a second outlet path B. The third conveyor 118 conveys the debris to a waste unit because the composition of the debris in the second outlet path is substantially non-metallic waste materials such as slag.

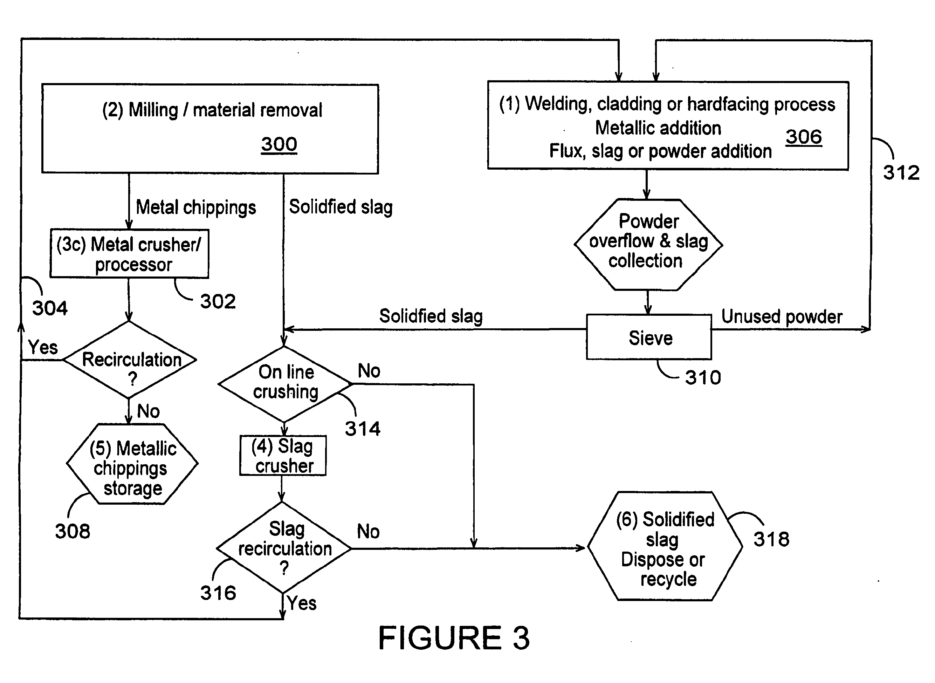

As shown above with reference to Figure 2, a milling head 102 machines off reinforcement simultaneously with welding of a component 104. The subsequent separation between the metallic debris and slag may be achieved directly or indirectly as discussed below with reference to Figures 3 to 5. Further, the milling head 102 may be operated separately from or remote from the welding process.

Referring to Figure 3, a schematic flow diagram according to a second embodiment of the present invention illustrates direct metal separation after machining where the steps of machining and welding are performed simultaneously.

Following a machining step 300, the metallic debris is subject to a debris crushing step 302 by a crushing means (not shown in Figure 3). Following the crushing step 302 the metallic debris can be either recirculated in a recirculating step 304 to a fusion process step 306 or to a storage step 308 for later use.

If the metallic debris is stored for subsequent use in the welding process it can be processed further by additional processing steps. Such additional processing steps can include crushing steps or further processing steps.

Additionally, slag and flux used in the welding process step 306 can be collected and separated in a flux and slag separating step 310. For the flux and slag separating step 310 a sieve may be used to collect large used particulate flux and solidified slag whereas unused powered flux may be collected and recirculated back in a flux recirculating step 312 to the fusion process.

The solidified slag is optionally crushed at a solidified slag crushing step 314 and recirculated 316 into the welding process 306 or collected 318 for disposal or subsequent reuse.

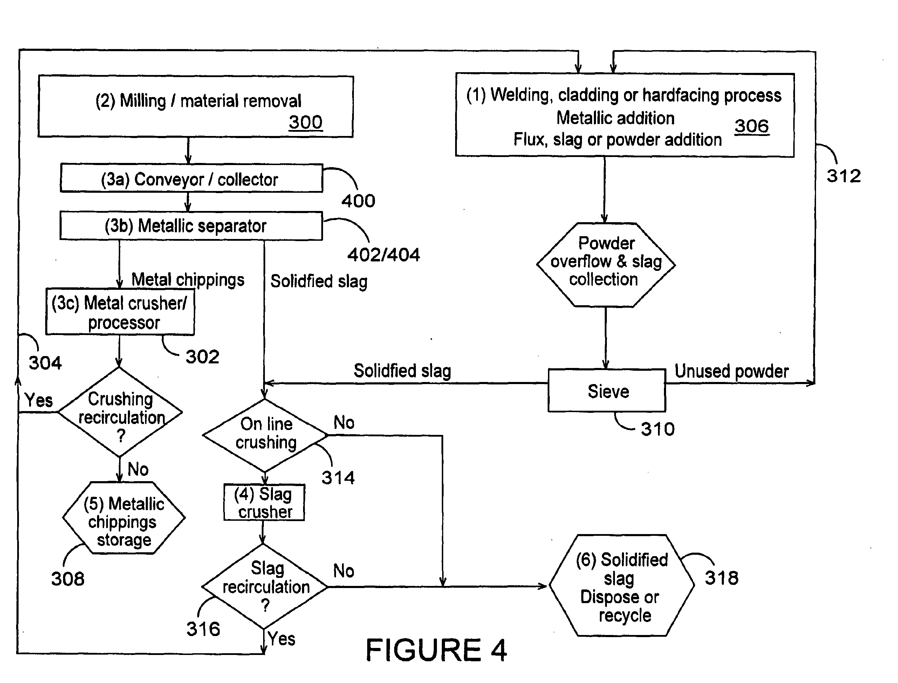

Referring to Figure 4, a schematic flow diagram according to a third embodiment of the present invention illustrates indirect metal separation after machining where the steps of machining and welding may or may not be performed simultaneously.

In Figure 4, like process steps as described and illustrated having regard to Figure 3 have been given like reference numbers.

Following the machining step 300, the metallic debris is subject to a first conveyor step 400 and a debris sorting step comprising a debris collector for receiving, when in use, metallic debris from the surface of a welded component. The metallic debris is subjected to a separating step 404 using, for example a magnetic device 110 as described in connection with Figure 2. The metallic debris is subject to the debris crushing step 302 by a crushing means (not shown in Figure 3). Following the crushing step 302 the metallic debris can be either recirculated in a recirculating step 304 to a welding process step 306 or to a storage step 308 for later use.

Additionally, slag and flux used in the welding process step 306 can be collected and separated in a flux and slag separating step 310. For the flux and slag separating step 310 a sieve may be used to collect large used particulate flux and solidified slag whereas unused powered flux may be collected and recirculated back in a flux recirculating step 312 to the welding process.

The solidified slag is optionally crushed at a solidified slag crushing step 314 and recirculated 316 into the welding process 306 or collected 318 for disposal or subsequent reuse.

No doubt many other effective alternatives will occur to the skilled person. It will be understood that the invention is not limited to the described embodiments and encompasses modifications apparent to those skilled in the art lying within the scope of the claims appended hereto.

## Claims

1. Welding apparatus for use in the manufacture of welded components, comprising welding means at a welding location, means for supporting a substrate to be welded by the welding means at the welding location and machining means arranged to machine the surface of a so-welded component; the apparatus **characterised by** including: a debris sorter comprising a debris collector for receiving, when in use, machined debris from the surface of a welded component, the debris collector being connected to a debris separator for separating the machined debris by type into at least a first outlet path and a second outlet path; wherein the first outlet path is a feedback path connected to an input at the welding location.

2. An apparatus as claimed in claim 1, wherein a crushing means is disposed in the first outlet path.

3. An apparatus as claimed in claim 1 or claim 2, wherein the debris separator is configured to separate a metal from the remainder of the machined debris.

4. An apparatus as claimed in any preceding claim wherein the debris separator is a magnetic device.

5. An apparatus as claimed in claim 4, wherein the magnetic device is a coil.

6. An apparatus as claimed in any preceding claim, wherein the first and/or second outlet paths comprise a conveyor belt.

7. An apparatus as claimed in any preceding claim, wherein the first and second outlet paths are offset in height relative to one and another.

8. An apparatus as claimed in any preceding claim, wherein the welding means in an arc welding gun.

9. An apparatus as claimed in any one of claims 2 to 8, wherein, in use, the machined debris is continuously sorted by the debris sorter and continuously fed back to the input at the welding location

10. A method of manufacturing and machining a welded component, the method comprising welding a surface of a component and then machining the so-welded component; the method **characterised by** including:
collecting machined debris resulting from the machining of the component, and
separating the machined debris by type into at least a first outlet path and a second outlet path; and
feeding-back via the first outlet path one type of separated machined debris for use in the step of welding a component.

11. A method as claimed in claim 10, wherein the separating of the machined debris and the feeding-back of the separated machined debris is carried out continuously.

12. A method as claimed in any one of claims 10 to 11, comprising a step of crushing the machined debris prior to feeding-back or storing the one type of separated machined debris.

13. A method as claimed in any one of claims 10 to 12, wherein the separating is carried out magnetically.

14. A method as claimed in any one of claims 10 to 13, wherein the step of storing or feeding-back is carried out continuously whilst the step of welding and machining is carried out.

15. A method as claimed in any one of claims 10 to 14, wherein welding is carried out by means of a welding gun.

## Patentansprüche

1. Schweißeinrichtung zur Verwendung bei der Herstellung von geschweißten Komponenten, welche Folgendes enthält: Schweißmittel an einer Schweißstation, Mittel zum Halten eines durch die Schweißstation an der Schweißstation zu schweißenden Substrats und Abarbeitungsmittel zur Abarbeitung der Oberfläche der so geschweißten Komponente, wobei die Einrichtung **dadurch gekennzeichnet ist, dass** ein Abfallsortierer vorgesehen ist, der einen Abfallsammler enthält, der den im Betrieb von der Oberfläche einer geschweißten Komponente abgearbeiteten Abfalls aufnimmt, wobei der Abfallsammler mit einem Abfalltrenner zur Trennung des abgearbeiteten Abfalls nach seiner Art in wenigstens einen ersten Ausgangspfad und einen zweiten Ausgangspfad aufteilt, wobei der erste Ausgangspfad ein Rückführweg ist, der mit einem Eingang an der Schweißstation verbunden ist.

2. Einrichtung nach Anspruch 1, wobei ein Zerkleinerungsmittel im ersten Ausgangspfad vorgesehen ist.

3. Einrichtung nach Anspruch 1 oder 2, wobei der Abfalltrenner so konfiguriert ist, dass er ein Metall von dem Rest des abgearbeiteten Abfalls abtrennt.

4. Einrichtung nach einem der vorhergehenden Ansprüche, wobei der Abfalltrenner eine magnetische Einrichtung ist.

5. Einrichtung nach Anspruch 4, wobei die magnetische Einrichtung eine Spule ist.

6. Einrichtung nach einem der vorhergehenden Ansprüche, wobei der erste und/oder zweite Ausgangspfad ein Förderband aufweist.

7. Einrichtung nach einem der vorhergehenden Ansprüche, wobei die ersten und zweiten Ausgangspfade in der Höhe relativ zueinander versetzt sind.

8. Einrichtung nach einem der vorhergehenden Ansprüche, wobei das Schweißmittel eine Bogenschweißpistole ist.

9. Einrichtung nach einem der Ansprüche 2-8, wobei bei der Benutzung der abgearbeitete Abfall kontinuierlich durch den Abfallsortierer sortiert wird und kontinuierlich zum Eingang der Schweißstation zurückgeführt wird.

10. Verfahren zur Herstellung und Abarbeitung einer geschweißten Komponente, wobei das Verfahren das Schweißen einer Oberfläche einer Komponente und anschließend das Abarbeiten der so geschweißten Komponente umfasst, wobei das Verfahren durch Folgendes gekennzeichnet ist:
Sammeln von abgearbeiteten Abfall aufgrund der Abarbeitung der Komponente, und
Trennung des abgearbeiteten Abfalls nach seiner Art in wenigstens einen ersten Ausgangspfad und einen zweiten Ausgangspfad, und
Rückführung einer Art des abgetrennten abgearbeiteten Abfalls über den ersten Ausgangspfad zur Verwendung in dem Schritt des Schweißens einer Komponente.

11. Verfahren nach Anspruch 10, wobei die Trennung des abgearbeiteten Abfalls und die Rückführung des getrennten abgearbeiteten Abfalls kontinuierlich ausgeführt werden.

12. Verfahren nach einem der Ansprüche 10 - 11, welches einen Schritt des Zerkleinerns des bearbeiteten Abfalls vor der Rückführung oder Lagerung der einen Art des getrennten abgearbeiteten Abfalls enthält.

13. Verfahren nach einem der Ansprüche 10 - 12, wobei die Abtrennung magnetisch ausgeführt wird.

14. Verfahren nach einem der Ansprüche 10-13, wobei der Schritt der Lagerung oder der Rückführung während der Schritt des Schweißens und des Abarbeiten kontinuierlich ausgeführt wird.

15. Verfahren nach einem der Ansprüche 10 - 14, wobei das Schweißen durch eine Schweißpistole ausgeführt wird.

## Revendications

1. Appareil de soudage destiné à être utilisé pour la fabrication de composants soudés, comprenant des moyens de soudage à un emplacement de soudage, des moyens pour supporter un substrat à souder avec les moyens de soudage à l'emplacement de soudage, et des moyens d'usinage agencés pour usiner la surface d'un composant ainsi soudé ; l'appareil étant **caractérisé en ce qu'**il comprend : un trieur de débris comprenant un collecteur de débris pour recevoir, pendant l'utilisation, les débris usinés provenant de la surface d'un composant soudé, le collecteur de débris étant raccordé à un séparateur de débris pour séparer par type, les débris usinés, dans au moins une première trajectoire de sortie et une seconde trajectoire de sortie ; la première trajectoire de sortie étant une trajectoire de retour raccordée à une entrée, à l'emplacement de soudage.

2. Appareil selon la revendication 1, dans lequel un moyen de broyage est disposé dans la première trajectoire de sortie.

3. Appareil selon la revendication 1 ou 2, dans lequel le séparateur de débris est configuré pour séparer un métal du reste des débris usinés.

4. Appareil selon l'une quelconque des revendications précédentes, dans lequel le séparateur de débris est un dispositif magnétique.

5. Appareil selon la revendication 4, dans lequel le dispositif magnétique est une bobine.

6. Appareil selon l'une quelconque des revendications précédentes, dans lequel la première et/ou la seconde trajectoire de sortie comprend (comprennent) un transporteur à courroie.

7. Appareil selon l'une quelconque des revendications précédentes, dans lequel les première et seconde trajectoires de sortie sont décalées en hauteur l'une par rapport à l'autre.

8. Appareil selon l'une quelconque des revendications précédentes, dans lequel les moyens de soudage se présentent sous la forme d'un pistolet de soudage à l'arc.

9. Appareil selon l'une quelconque des revendications 2 à 8, dans lequel, à l'usage, les débris usinés sont triés de manière continue par le trieur de débris et ramenés de manière continue vers l'entrée, à l'emplacement de soudage.

10. Procédé de fabrication et d'usinage d'un composant soudé, le procédé comprenant les étapes consistant à souder une surface d'un composant, puis à usiner le composant ainsi soudé ; le procédé étant **caractérisé en ce qu'**il comprend les étapes consistant à :
collecter les débris usinés provenant de l'usinage du composant, et
séparer par type les débris usinés dans au moins une première trajectoire de sortie et une seconde trajectoire de sortie ; et
ramener via la première trajectoire de sortie un type de débris usinés séparés, destinés à être utilisés à l'étape de soudage d'un composant.

11. Procédé selon la revendication 10, dans lequel l'étape consistant à séparer les débris usinés et à ramener les débris usinés séparés est réalisée de manière continue.

12. Procédé selon l'une quelconque des revendications 10 à 11, comprenant une étape consistant à broyer les débris usinés avant l'étape consistant à ramener ou à stocker un type de débris usinés séparés.

13. Procédé selon l'une quelconque des revendications 10 à 12, dans lequel la séparation est réalisée magnétiquement.

14. Procédé selon l'une quelconque des revendications 10 à 13, dans lequel l'étape de stockage ou de retour est réalisée de manière continue, en même temps que l'étape de soudage et d'usinage.

15. Procédé selon l'une quelconque des revendications 10 à 14, dans lequel le soudage est réalisé au moyen d'un pistolet de soudage.
